# EUROPÄISCHE PATENTSCHRIFT

(11) **EP 4 147 557 B1**
(45) Veröffentlichungstag und Bekanntmachung des Hinweises auf die Patenterteilung: **03.07.2024**
(21) Anmeldenummer: 22194427.5
(22) Anmeldetag: 07.09.2022
(51) Int. Cl.: A01D 34/30

(54) **SCHNEIDWERK FÜR OBERHALB VON KULTURPFLANZEN ABZUSCHNEIDENDES UNKRAUT**
CUTTING DEVICE FOR WEEDS TO BE CUT ABOVE CULTIVATED PLANTS
MÉCANISME DE COUPE POUR MAUVAISES HERBES À COUPER AU-DESSUS DES PLANTES CULTIVÉES

(30) Priorität: 08.09.2021 AT 507122021
(43) Veröffentlichungstag der Anmeldung: 15.03.2023
(73) Patentinhaber: Hanslauer, Georg, 4782 Sankt Florian am Inn (AT)
(72) Erfinder: Hanslauer, Georg, 4782 Sankt Florian am Inn (AT)
(74) Vertreter: Hübscher & Partner Patentanwälte GmbH

(56) Entgegenhaltungen:
- DE-A1- 3 334 234
- DE-B- 1 247 730
- JP-A- H02 195 812

## Beschreibung

Die Erfindung bezieht sich auf ein Schneidwerk für oberhalb von Kulturpflanzen abzuschneidendes Unkraut mit wenigstens einem Messerbalken, der auf einem Träger angeordnete Führungen für ein Doppelmesser aufweist, dessen Messer, ein Ober- und ein Untermesser, durch Schubkurbelgetriebe gegensinnig hin- und hergehend antreibbar sind.

Zur Schädigung von Unkräutern, deren Wuchshöhe größer als die von Kulturpflanzen ist, können die Unkräuter oberhalb der Kulturpflanzen mithilfe eines beispielsweise an einen Ackerschlepper anbaubaren Frontschneidwerks abgeschnitten werden. Die Messerbalken bekannter Schneidwerke, die für diesen Zweck eingesetzt werden, weisen quer zu Fahrrichtung verlaufende, der Höhe nach verstellbare Träger mit Führungen für Doppelmesser auf, deren Ober- und Untermesser durch Schubkurbelgetriebe gegensinnig hin- und hergehend angetrieben werden. Da der Messerbalken in Fahrrichtung abwärts geneigt ist, fällt das Schnittgut vor dem Messerbalken nach unten und muss nicht über den Messerbalken abgeführt werden, was zu Störungen beim Ablegen des Schnittguts führen kann. Nachteilig ist allerdings, dass das Abfallen des Schnittguts auf den Boden vor den Messerbalken nur bei niedrigen Fahrgeschwindigkeiten sichergestellt ist.

Für höhere Fahrgeschwindigkeiten und damit höhere Schnittleistungen kann das Schnittgut nur über den Messerbalken hinweg auf dessen Rückseite abgeworfen werden. Abgesehen davon, dass die Träger keinen Anlass zu Störungen der Schnittgutförderung über die Träger hinweg geben sollen, müssen zur Vermeidung gesonderter Tragkonstruktionen für die Messerbalken die nicht nur die Messerführungen, sondern auch die Messerantriebe, üblicherweise durch einen Motor angetriebene Schubkurbelgetriebe, aufnehmenden Träger alle Betriebslasten abtragen, was bei einem vorgegebenen Gewicht der Messerbalken deren Länge erheblich beschränkt. Bei Mähmaschinen, deren Schneidwerk sich über Gleitschuhe am Boden abstützt ist es bekannt (CH 152 197 A), die in Führungen eines Balkens gegensinnig hin- und hergehend verschiebbaren Messer mithilfe zweier in einem Führungsblock parallel geführter Schubstangen anzutreiben. Auf dem Führungsblock ist ein doppelarmiger Hebel gelagert, der in quer zur Schubstangenführung verlaufende Langlöcher der Schubstangen eingreifende Mitnehmer aufweist und als Schwinge durch eine Kurbelstange hin- und herdrehend angetrieben werden kann. Abgesehen davon, dass die Langlochverbindung zwischen den Schubstangen und dem doppelarmigen Hebel verschleißanfällig sind, erfordert die Parallelführung der Schubstangen zusätzliche gelenkige Verbindungen mit den Messern, um Zwangskräfte zu vermeiden.

Bei einem ähnlich aufgebauten Schneidwerk (US 51 380 A) werden zum Antrieb der hin- und hergehend verschiebbar geführten Messer zwei Schubkurbelgetriebe eingesetzt, die eine gemeinsame über ein Getriebe antreibbare Kurbelscheibe aufweisen, an denen die beiden mit den Messern verbundenen Schubstangen einander diametral gegenüberliegend angreifen. Das Dokument beschreibt ein Balkenmähwerk, wobei an einem Ende des Rahmens des Balkenmähwerks zwei fest miteinander verbundene Arme in einem Lagerkörper um eine in Fahrtrichtung liegende Achse schwenkbar gelagert sind. Mit diesen Armen ist ein Mähbalken über einen Innenschuh gelenkig verbunden. Der Mähbalken kann daher während der Arbeit unter dem Einfluss von Massenkräften oder von Kräften, die durch Antriebsgestänge übertragen werden, Querschwingungen ausführen. Die Antriebskräfte können über Kipphebel und eine Pleuelstange vom Antrieb des Mähers abgeleitet werden. Nachteilig bei diesen bekannten Antrieben der Messer sind vor allem der mit der Anordnung der Schubstangen in Verlängerung der Messer bedingte Platzbedarf und eine aufgrund der Ausbildung des Messerbalkens als stegförmiger Träger beschränkte Eigensteifigkeit, die wegen der Bodenabstützung der Messerbalken für diesen Einsatz ausreicht, nicht aber für Schneidwerke zum Abschneiden von Unkraut oberhalb von Kulturpflanzen. Der Erfindung liegt somit die Aufgabe zugrunde, Konstruktionsvoraussetzungen zu schaffen, die bei einem Schneidwerk zur Unkrautbeschneidung oberhalb von Kulturpflanzen Messerbalken mit einer vergleichsweise großen Länge ohne Einsatz zusätzlicher Tragstrukturen ermöglichen.

Ausgehend von einem Schneidwerk der eingangs geschilderten Art löst die Erfindung die gestellte Aufgabe dadurch, dass die Kurbeln der beiden Schubkurbelgetriebe zu einem gemeinsamen, im Träger gelagerten, doppelarmigen Hebel zusammengefasst sind, der eine Schwinge eines antreibbaren Schwingkurbelgetriebes bildet, und dass der Träger als Hohlprofil mit einem oberen, die Führungen für das Doppelmesser aufnehmenden Wandsteg ausgebildet ist.

Der Erfindung liegt die Erkenntnis zugrunde, dass dann vorteilhafte Konstruktionsbedingungen für die Messerbalken vorgegeben werden können, wenn die Schwingungsanregung durch den Messerantrieb weitgehend unterdrückt werden kann. Bei einem Schubkurbelantrieb für das Ober- und das Untermesser der Doppelmesser heben sich zwar die Massenkräfte der gegensinnig hin- und herbewegten Messer in Bezug auf deren Bewegungsrichtung im Wesentlichen auf, nicht aber bezüglich einer dazu querverlaufenden Richtung. Durch die Maßnahme, die Kurbeln der beiden Schubkurbeltriebe für das Ober- und das Untermesser zu einem gemeinsamen, doppelarmigen Hebel zusammenzufassen, der im Träger gelagert ist, gelingt es in einfacher Weise, die Messer von Querschwingungen freizuhalten und die antriebsbedingten Querschwingungen über die Lagerung des doppelarmigen Hebels in den Träger abzuleiten. Der doppelarmige Hebel braucht somit lediglich hin- und herschwingend angetrieben zu werden, was vorteilhaft mithilfe eines Schwingkurbelgetriebes erfolgt, dessen Kurbel durch einen Motor angetrieben wird und dessen Koppel am doppelarmigen Hebel als Schwinge angreift.

Mit der Ausbildung des Trägers als Hohlprofil mit einem oberen Wandsteg werden für eine entsprechende Lastabtragung ausreichende Widerstandsmomente sichergestellt, ohne die Schnittgutführung über den Träger hinweg zu beeinträchtigen, weil der obere Wandsteg eine Messerführung erlaubt, die einen stufenlosen Übergang des Schnittguts von den Messern über die obere Deckenwand zur Trägerrückseite ermöglicht.

Der als Hohlprofil ausgebildete Träger des Messerbalkens bietet darüber hinaus den Vorteil, dass das Schwingkurbelgetriebe innerhalb des Hohlprofils des Trägers angeordnet werden kann. Außerdem kann die Drehachse des doppelarmigen Hebels in einander gegenüberliegenden Seitenwänden des Hohlprofils des Trägers gelagert werden.

Wird der Träger zusätzlich mit einer den oberen Wandsteg mit den Führungen für das Doppelmesser abdeckenden Leitwand versehen, so kann der Abwurf des Schnittguts auf der dem Doppelmesser abgewandten Seite des Trägers zusätzlich unterstützt werden, weil diese Leitwand eine Stolperkante bildet, die bewirkt, dass das Schnittgut über den Träger kippt und dadurch besser vom Träger abrutschen kann.

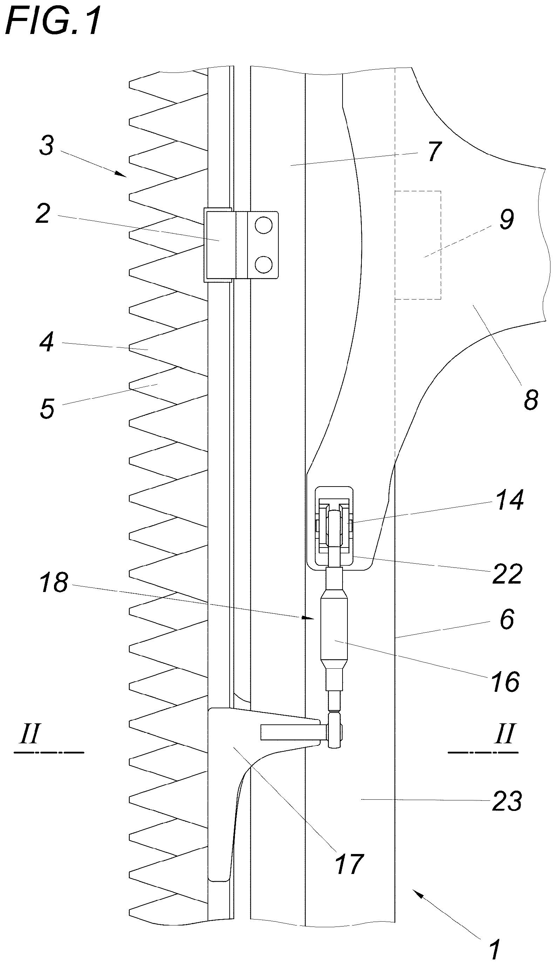

In der Zeichnung ist der Erfindungsgegenstand beispielsweise dargestellt. Es zeigen
- Fig. 1: ein erfindungsgemäßes Schneidwerk ausschnittsweise im Bereich des Messerantriebs in einer Draufsicht auf den Messerbalken,
- Fig. 2: einen Schnitt nach der Linie II-II der Fig. 1 in einem größeren Maßstab und

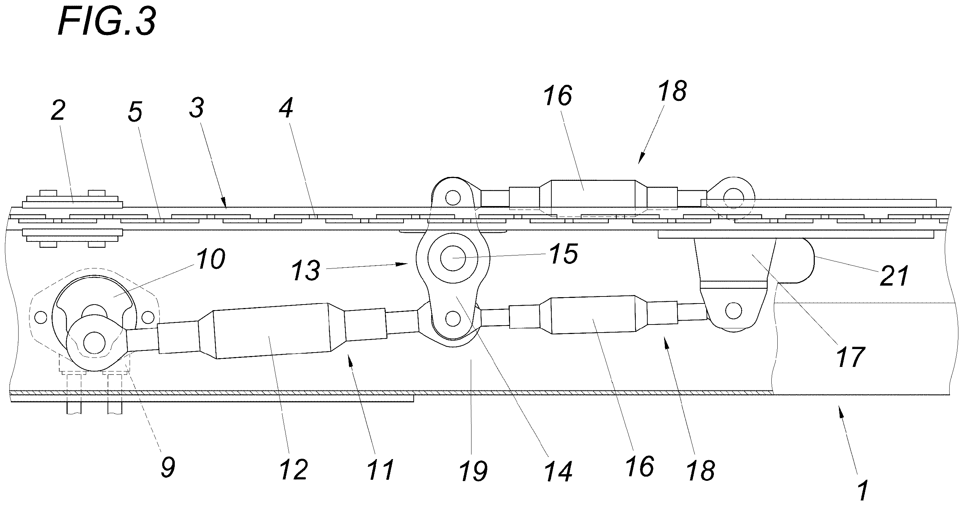

- Fig. 3: eine Vorderansicht des Messerbalkens mit aufgerissener vorderen Seitenwand des Trägers

Ein erfindungsgemäßes Schneidwerk umfasst wenigstens einen Messerbalken, der einen Träger 1 und auf dem Träger 1 über dessen Länge verteilte Führungen 2 für ein Doppelmesser 3 aufweist, dessen Obermesser mit 4 und dessen Untermesser mit 5 bezeichnet sind. Der Träger 1 wird vorteilhaft durch ein Hohlprofil 6 gebildet, das mit einem oberen Wandsteg 7 versehen ist, auf dem die Führungen 2 für das Doppelmesser 3 befestigt sind. Der Träger 1 ist mithilfe eines Tragarms 8 an einem Gestell angelenkt, das der Höhe nach verstellbar an der Frontseite eines Ackerschleppers angebaut werden kann. Der Messerbalken kann somit um die Anlenkachse des Tragarms 8 am Gestell aus einer Arbeitsstellung in eine Transportstellung hochgeschwenkt werden.

Zum Antrieb der beiden Messer 4, 5 des Doppelmessers 3 dient ein gemeinsamer Motor 9, z. B. ein Hydraulikmotor, der die Kurbel 10 eines Schwingkurbelgetriebes 11 antreibt. Die mit der Kurbel 10 durch eine in ihrer Länge einstellbare Koppel 12 verbundene Schwinge 13 ist als doppelarmiger Hebel 14 ausgebildet, der auf einer Drehachse 15 gelagert ist. An einander diametral gegenüberliegenden Enden dieses doppelarmigen Hebels 14 sind Schubstangen 16 für den Antrieb des Ober - und des Untermessers 4, 5 angelenkt, die mit Mitnehmern 17 versehen sind, an denen die Schubstangen 16 angreifen. Die Arme des doppelarmigen Hebels 14 bilden somit mit den zugehörigen Schubstangen 16 und den Mitnehmern 17 je ein Schubkurbelgetriebe 18 für den gegensinnig hin- und hergehenden Antrieb des Ober- und des Untermessers 4, 5.

Die Ausbildung des Trägers 1 als Hohlprofil 6 eröffnet die vorteilhafte Möglichkeit, das Schwingkurbelgetriebe 11 innerhalb des Hohlprofils 6 anzuordnen. Zu diesem Zweck sitzt die mit einem Massenausgleich versehene Kurbel 10 auf einem in das Hohlprofil 6 ragenden Wellenstummel des außen an der in Bezug auf die Fahrrichtung hinteren Seitenwand 19 des Hohlprofils 6 angeflanschten Motors 9. während die Drehachse 15 des die Schwinge 13 bildenden, doppelarmigen Hebels 14 in den einander gegenüberliegenden Seitenwänden 19, 20 des Hohlprofils 9 gelagert ist. Dadurch wird in vorteilhafter Weise sichergestellt, dass durch das Schwingkurbelgetriebe 11 angeregte Schwingungskomponenten quer zur Messerführung vom Träger 1 aufgenommen werden, sodass das Doppelmesser 3 entsprechend entlastet wird.

Damit die Antriebsverbindung zwischen dem Schwingkurbelgetriebe 11 und dem Doppelmesser 3 nicht durch das Hohlprofil 6 des Trägers 1 behindert werden kann, sind im Hohlprofil 6 Durchtrittsöffnungen 21, 22 einerseits für den Mitnehmer 17 des Untermessers 5 und anderseits für den Hebel 14 in der vorderen Seitenwand 20 bzw. in der Deckenwand 23 des Hohlprofils vorgesehen, wenn die Schubstange 16 für das Obermesser 4 außerhalb des Hohlprofils 6 geführt wird, wie dies gemäß dem Ausführungsbeispiel der Fall ist.

Mithilfe eines oberhalb der Kulturpflanzen geführten Schneidwerks der erfindungsgemäßen Art kann der die Kulturpflanzen überragende Teil der Unkräuter abgeschnitten und über den Träger 1 hinweg hinter dem Messerbalken abgeworfen werden, was eine Voraussetzung für höhere Fahrgeschwindigkeiten und damit für höhere Schnittleistungen darstellt. Der als Hohlprofil 6 ausgebildete Träger 1 bringt nicht nur ausreichend hohe Widerstandsmomente zur Aufnahme der Betriebslasten mit sich, sondern ermöglicht auch eine weitgehend geschützte Unterbringung des Messerantriebs, wobei der in Verlängerung der Deckenwand 23 nach vorne abstehende Wandsteg 7 eine Messerführung erlaubt, die das Abwerfen des Schnittgutes über den Träger 1 hinweg vorteilhaft unterstützt.

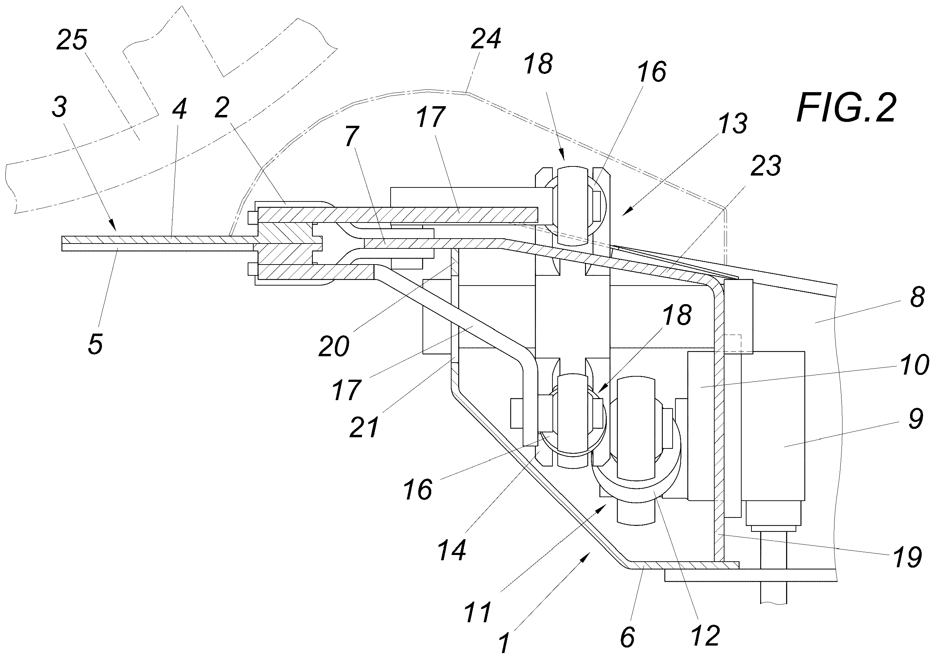

Zusätzlich kann eine in der Fig. 2 strichpunktiert angedeutete Leitwand 24 am Träger 1 angeordnet werden, die den Wandsteg 7 mit den Führungen 2 für das Doppelmesser 3 abdeckt und eine Stolperkante bildet, über die das Schnittgut kippt, um auf der vom Doppelmesser 3 abgekehrten Trägerseite besser vom Träger 1 abgleiten zu können.

Wie in der Fig. 2 ebenfalls angedeutet ist, kann im Bedarfsfall dem Doppelmesser 3 eine zweiteilige Haspel 25 zugeordnet werden, die mit ihrem Bürstenbesatz nicht nur für eine Förderung des Schnittguts zum Doppelmesser 3 sorgt, sondern auch die Förderung des geschnittenen Schnittguts über den Träger 1 hinweg verbessern kann.

## Patentansprüche

1. Schneidwerk für oberhalb von Kulturpflanzen abzuschneidendes Unkraut mit wenigstens einem Messerbalken, der auf einem Träger (1) angeordnete Führungen (2) für ein Doppelmesser (3) aufweist, dessen Messer, ein Ober- und ein Untermesser (4, 5), durch Schubkurbelgetriebe (18) gegensinnig hin- und hergehend antreibbar sind, **dadurch gekennzeichnet, dass** die Kurbeln der beiden Schubkurbelgetriebe (18) zu einem gemeinsamen, im Träger (1) gelagerten, doppelarmigen Hebel (14) zusammengefasst sind, der eine Schwinge (13) eines antreibbaren Schwingkurbelgetriebes (11) bildet, und dass der Träger (1) als Hohlprofil (6) mit einem oberen, die Führungen (2) für das Doppelmesser (3) aufnehmenden Wandsteg (7) ausgebildet ist.

2. Schneidwerk nach Anspruch 1, **dadurch gekennzeichnet, dass** das Schwingkurbelgetriebe (11) innerhalb des Hohlprofils (6) des Trägers (1) angeordnet ist.

3. Schneidwerk nach Anspruch 1 oder 2, **dadurch gekennzeichnet, dass** die Drehachse (15) des doppelarmigen Hebels (14) in einander gegenüberliegenden Seitenwänden (19, 20) des Hohlprofils (6) des Trägers (1) gelagert ist.

4. Schneidwerk nach einem der Ansprüche 1 bis 3, **dadurch gekennzeichnet, dass** der Träger (1) mit einer den oberen Wandsteg (7) mit den Führungen (2) für das Doppelmesser (3) abdeckenden Leitwand (24) versehen ist.

## Claims

1. Cutting unit for weeds to be cut off above cultivated plants, having at least one cutter bar which has guides (2) for a double cutter (3), which guides (2) are arranged on a carrier (1), the cutters of which double cutter (3), an upper and a lower cutter (4, 5), can be driven back and forth in opposite directions by slider-crank gears (18), **characterized in in that** the cranks of the two slider-crank gears (18) are combined to form a common double-armed lever (14) which is mounted in the carrier (1) and which forms a swing arm (13) of a drivable swinging crank gear (11), and **in that** the carrier (1) is designed as a hollow profile (6) with an upper wall web (7) receiving the guides (2) for the double cutter (3).

2. Cutting unit according to claim 1, **characterized in that** the swinging crank gear (11) is arranged inside the hollow profile (6) of the carrier (1).

3. Cutting unit according to claim 1 or 2, **characterized in that** the axis of rotation (15) of the double-armed lever (14) is mounted in side walls (19, 20) of the hollow profile (6) of the carrier (1), wherein the side walls (19, 20) are opposite of each other.

4. Cutting unit according to one of claims 1 to 3, **characterized in that** the carrier (1) is provided with a guide wall (24) covering the upper wall web (7) with the guides (2) for the double cutter(3).

## Revendications

1. Outil de coupe pour les plantes adventices à couper au-dessus des plantes cultivées avec au moins une barre de coupe qui comporte des glissières (2) agencées sur un support (1) pour une double lame (3) dont les lames, une lame supérieure et une lame inférieure (4, 5) peuvent être entraînées en sens contraire l'une de l'autre par des transmissions à bielle et à manivelle (18), **caractérisé en ce que** les manivelles des deux transmissions à bielle et à manivelle (18) sont réunies pour former un levier à deux bras (14) commun monté dans le support (1) qui forme un bras oscillant (13) d'une transmission à manivelle oscillante (11), et que le support (1) est configuré comme un profil creux (6) avec une paroi supérieure (7) accueillant les glissières (2) destinées à la double lame (3).

2. Outil de coupe selon la revendication 1, **caractérisé en ce que** la transmission à manivelle oscillante (11) est agencée à l'intérieur du profil creux (6) du support (1).

3. Outil de coupe selon la revendication 1 ou 2, **caractérisé en ce que** l'axe de rotation (15) du levier à deux bras (14) est monté dans des parois latérales (19, 20) opposées entre elles du profil creux (6) du support (1).

4. Outil de coupe selon une des revendications 1 à 3, **caractérisé en ce que** le support (1) est doté avec une paroi de guidage (24) recouvrant la paroi supérieure (7) avec les glissières (2) destinées à la double lame (3).
